# EUROPEAN PATENT SPECIFICATION

(11) **EP 2 587 753 B1**
(45) Date of publication and mention of the grant of the patent: **18.12.2013**
(21) Application number: 11306379.6
(22) Date of filing: 25.10.2011
(51) Int. Cl.: H04L 27/26, H04B 1/04

(54) **Component transmitter, transmission stage, transceiver, method for a transmission stage and computer program**
Komponentensender, Übertragungsstufe, Sender-Empfänger, Verfahren für eine Übertragungsstufe und Computerprogramm
Émetteur de composants, stade de transmission, émetteur/récepteur, procédé pour stade de transmission et programme informatique

(43) Date of publication of application: 01.05.2013
(73) Proprietor: Alcatel Lucent, 75007 Paris (FR)
(72) Inventor: Wajda, Wieslawa, 75210 Keltern (DE)
(74) Representative: Wetzel, Emmanuelle

(56) References cited:
- EP-A1- 1 928 115
- EP-A2- 2 028 809
- WO-A1-2010/031493
- US-A1- 2009 185 545
- US-A1- 2010 248 660
- MOZHGAN HEDAYATI ET AL: "Reducing Energy Consumption through Adaptation of Number of Active Radio Units", VEHICULAR TECHNOLOGY CONFERENCE (VTC SPRING), 2011 IEEE 73RD, IEEE, 15 May 2011 (2011-05-15), pages 1-5, XP031896886, DOI: 10.1109/VETECS.2011.5956486 ISBN: 978-1-4244-8332-7
- ERICSSON ET AL: "UTRA Node B energy saving", 3GPP DRAFT; R1-101803 UTRA NODEB ENERGY SAVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 17 April 2010 (2010-04-17), XP050419762, [retrieved on 2010-04-17]

## Description

Embodiments of the present invention relate to wireless communication, more particularly but not exclusively to transmitter concepts in mobile communication networks.

### Background

Demands for higher data rates for mobile services are steadily increasing. At the same time modem mobile communication systems as 3rd generation systems (3G as abbreviation) and 4th generation systems (4G as abbreviation) provide enhanced technologies which enable higher spectral efficiencies and allow for higher data rates and cell capacities. In order to keep up with the steadily growing data demands, networks become more and more dense, i.e. the cells become smaller and the number of base station transceivers is growing leading to a higher base station density (number of base station transceivers per area). With the growing number of base station transceivers the power consumption of the network, i.e. its OPerational EXpenditure (OPEX), becomes more and more an issue for operators of such networks.

There are some known improvements of HardWare (HW) components to reduce power consumption in the case of lower traffic, but during idle states, while no traffic is transferred, power is always consumed and cannot be lowered below a certain minimum level. One known method to reduce the power of a macro base station transceiver at low traffic is an approach based on a stepwise adjustment of Power Amplifiers' (PA) operating points to current signal strengths. This approach is based on a fast adjustment of the PA operating point, which creates signal noise by parasitic signal modulation. Another method for energy salving is micro sleep. In an Orthogonal Frequency Division Multiplexing system (OFDM), e.g. a Long Term Evolution (LTE) system, a PA is switched off for one to three OFDM symbols, during which no data can be transmitted. The short time results from the necessity to send control and pilot signals in between the LTE frames.

Document WO2010/031493 discloses a technique for transmitting modulation symbols on multiple frequency resources. A method aspect of this technique includes applying a Discrete Fourier Transform (DFT) coding per set of modulation symbols of two or more sets of modulation symbols, wherein a first set of modulation symbols from the two or more sets of modulation symbols is transmitted on a set of frequency resources handled by the same power amplifier. Then, Orthogonal Frequency Division Multiplexing (OFDM) modulation is applied to the sets of DFT coded modulation symbols to output a first set of OFDM symbols for transmission on the set of frequency resources, and output another set of OFDM symbols for transmission on at least one additional frequency resource distinct from the set of frequency resources. Power amplification is then applied per set of frequency resources at the power amplifier.

Document EP 1 928 115 A1 provides a method and a system for transmitting data by a transmitter over a channel having a predetermined channel quality estimate. It comprises the steps of splitting an input data stream to be transmitted into a plurality of data sub-streams and processing each of the plurality of data sub-streams into a plurality of symbol subsets by selecting a certain scheme of coded modulation. The method further comprises processing, separately, each of the plurality of symbol subsets via a plurality of separate DFTs to obtain a plurality of DFT-precoded data sub-streams and allocating each DFT-precoded data sub-stream in a frequency resource block via a sub-carrier mapping module, so that for each data sub-stream the selected scheme of coded-modulation is chosen in dependence of the values of the channel quality estimate at the frequencies of its own allocated frequency resource block.

Document US 2010/248660 discloses a system having the possibility of chosing on which transmitter stage operating the transmission. Each transmitter stage has an own band.

### Summary

Embodiments are based on the finding that the energy consumption of a base station transceiver can, to some extent, be made dependent on its utilization or load. According to another finding, configurations of base station transceivers may not be homogeneous but inhomogeneous, and their capability to transfer data may not be evenly distributed with respect to the overall resource elements used in a communication system for data transmission. It is another finding that, for example, macro BSs in a wireless system are dimensioned to cover large physical areas with a relatively low traffic and micro BSs are capable to cover only small areas but with a high traffic load. Embodiments are based on the finding that BSs can be adapted with adjustable capabilities and flexible data transport resource elements.

Embodiments may provide the advantage, that a BS can be made adjustable, for example, based on load, coverage, transmission technique or service, by making the execution hardware more flexible, and that the power consumption of a BS can be reduced, adjusted, respectively.

In other words, embodiments are based on the finding that data transport resources can be abstracted in a frequency, time and code domain onto multiple hardware execution units, each of which is capable to perform all or a part of required transceiver operations. Furthermore, the execution units can support different maximum transmission powers per resource element, different bandwidth, different transmission techniques, etc. Moreover, execution units may be combined together either to perform more complex transceiver operations not supported by a single execution unit or to sum their physical abilities. Moreover the execution units can be dynamically allocated to one or many telecommunication providers to allow resource sharing in case of multi-operator support.

Embodiments can provide a transmission stage being operable to use a plurality of radio resources from a system bandwidth. Such a transmission stage can be operable to transmit radio signals in compliance with a communication system. The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), a Global System for Mobile Communication (GSM) or Enhanced Data Rates for GSM Evolution (EDGE) network, a GSM/EDGE Radio Access Network (GERAN), Long-term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA), Frequency Division Multiple Access (FDMA), Time Division Multiple Access (TDMA), etc. In the following the terms mobile communication system and mobile communication network are used synonymously.

Moreover, the term radio resources is used to represent an element or a combination of elements of the group of a frequency resource, a bandwidth, a carrier, a sub-carrier, a time resource, a radio frame, a time slot, a symbol, a sub-frame, a Time Transmission Interval (TTI), a code resource, an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spread Spectrum (FHSS) sequence, a Direct Sequence Spread Spectrum (DSSS) sequence, etc. In embodiments the plurality of radio resources may thus correspond to one of or a combination of the group of time resources, frequency resources, coding resources or transmission techniques.

In embodiments, the transmission stage can be implemented or integrated in a transceiver, which can comply to one of the above cited communication systems. Such transceiver can be located in the fixed or stationary part of the network, i.e. as in a base station, in a remote radio head, in an access point, in a macro cell, in a small cell, in a micro cell, in a femto cell, etc. A base station transceiver can be a wireless interface of a wired network, which enables transmission of radio signals to a user equipment or mobile transceiver. Such radio signal may comply with radio signals as, for example, standardized by the 3^{rd} Generation Partnership Project (3GPP) or, generally, in line with the above listed systems. Thus, a base station transceiver may correspond to a NodeB, an eNodeB, an access point, etc.

In other embodiments the transmission stage may be implemented in a transceiver on the mobile part of such a network, i.e. in a mobile transceiver such as e.g. in a smartphone, a cell phone, a user equipment, a laptop, a notebook, a personal computer, a Personal Digital Assistant (PDA), an Universal Serial Bus (USB) -stick, a car, etc.

In embodiments the transmission stage comprises two or more component transmitters. A component transmitter comprises means for transmitting on a subset of the plurality of radio resources. The means for transmitting can be implemented as transmitter circuitry, e.g. as a signal processing chain including one or a combination of the elements of the group of filter circuitry, a mixer, a power amplifier, an antenna, a diplexer, a digital-analog converter, etc. The same may apply to a receiver stage.

In embodiments the two or more component transmitters are operable to transmit using different subsets of radio resources from the plurality of radio resources and the different subsets of radio resources complement one another to the plurality of radio resources of the system bandwidth. In other words, the two or more subsets of radio resources used by the two or more component transmitters comprise the plurality of radio resources.

Embodiments may provide the advantage that radio resources can be grouped or clustered together in subsets or clusters and these subsets or clusters can be assigned to a component transmitter, e.g. a hardware implemented transmitter or execution unit, which then uses the subset or cluster for transmission. Other subsets can be formed and assigned to other component transmitters. As the radio resources can be grouped advantageously, e.g. resources which are rarely used are grouped together, hardware components can be switched on and off, dependent on the load of the system, i.e. dependent on the resource utilization. In embodiments the transmission stage may comprise means for adapting the subsets of radio resources of the one or more component transmitters. That is to say, the transmission stage may comprise means for adapting, for example, in terms of a controller, a base band processing unit, a processor, etc., the component transmitters. The subsets may therefore be changed depending on a load and operating situation of the transmission stage. Embodiments may therewith provide the advantage, that the power consumption can be adapted to the load and operating condition of the transmission stage or base station transceiver.

In embodiments the plurality of radio resources may correspond to a plurality of subcarriers, a plurality of time slots, for example, in an OFDM system and a plurality of coding schemes or coding for example in QAM, FHSS or DSSS. The two or more component transmitters can be operable to transmit on different subsets of combinations of subcarriers and time slots. For example, a first subset of radio resources may comprise radio resources, which are used to provide control and system information and which are necessary to make the system accessible or viable to users, while a second subset may comprise radio resources, which are solely used to transmit data to associated users. In such an embodiment, the transmitter component using the second subset can be switched off, when there is no data to transmit, e.g. at night. Since the system and control information is still provided using the first subset of radio resources, the system functionality may not be affected when switching off the component transmitter using the second subset of radio resources. At the same time, power savings can be enabled since the power consumption for the component transmitter for second subset of radio resources can be saved. In embodiments the first subset of radio resources may comprise resources for data transmission to users, such that one component transmitter can be used to keep the system alive to serve some users. Another component transmitter may then be switched on if a traffic load exceeds the transport capacity provided by the data transmission resources of the first subset.

In embodiments the component transmitters can be collocated or located at different places. For example, in an embodiment a component transmitter using the above first subset of radio resources (for transmission of system, control and some or no data information) may be surrounded by component transmitters using the above second subset of radio resources (for data transmission) and which are located at separated location. In other words, the coverage areas of the component transmitters may be different, they may or they may at least partly be non-overlapping.

In embodiments the transmission stage may comprise a component transmitter as primary execution unit. The primary execution unit may correspond to a transmitter with a reduced number of sub-carriers compared to an overall number of sub-carriers of the transmission stage. The transmission stage may comprise one or more component transmitters as one or more secondary execution units. The one or more secondary execution units can complement the reduced number of sub-carriers to the overall number of sub-carriers, i.e. the secondary execution units may use one or more sub-carriers which are not used by the primary execution unit. The transmission stage may comprise means for switching the one or more secondary execution units on and off dependent on a load situation of the transmission stage. In other words, the overall number of sub-carriers may be sub-divided in sub-sets of sub-carriers, which are assigned to different component transmitters. One component transmitter, i.e. the primary execution unit, can be assigned a subset of sub-carriers for transmission of the system and control information in order to keep the system viable towards associated users and/or some subcarriers for data transmission. The other component transmitters, i.e. the secondary execution units, can be assigned to sub-carriers for payload data transmission, which can then be switched on and off based on the data demand or load situation in the network. The more secondary execution units are utilized the finer the potential granularity of the load adaptation and the power saving. In embodiments, the means for switching can be implemented as switch, electronic switch, power supply, etc.

In some embodiments the plurality of radio resources can correspond to a plurality of time slots or symbols in repetitive radio frames. In other words, in embodiments transmissions can be organized in repetitive time frames, which can be further subdivided in time slots, TTIs, symbols or symbol durations. In some embodiments the plurality of radio resources can correspond to plurality of code schemes applied to frequency sub-bands and/or to repetitive time slots or radio frames. In other words, in embodiments transmissions can be organized using different coding schemes or codes (chips) as for example in case of FHS or DSSS.

The transmission stage may then comprise a component transmitter as primary execution unit. The primary execution unit corresponds to a transmitter transmitting in a subset of the plurality of time slots or symbols in a radio frame. That is to say, the primary execution unit may utilize a subset of the time slots, TTIs, or symbols in the repetitive time frames. The transmission stage further comprises one or more component transmitters as one or more secondary execution units. The one or more secondary execution units complement the subset of time slots or symbols to the plurality of time slots or symbols, i.e. the secondary execution unit may use one or more time slots, TTIs, or symbols, during which transmission of the primary execution unit is suspended or interrupted.

Furthermore, the transmission stage can comprise means for switching the secondary execution units on and off dependent on a load situation of the transmission stage. In other words, a radio frame may be sub-divided in sub-frames, which are assigned to different component transmitters. One component transmitter, i.e. the primary execution unit, can be assigned one or more sub-frames (time slots, TTIs, symbols) for transmission of the system and control information in order to keep the system viable towards associated users and it may be assigned some resources, e.g. sub-frames, for data transmission as well. The other component transmitters, i.e. the secondary execution units, can be assigned to sub-frames for data transmission, which can then be switched on and off based on the data demand or load situation in the network. The more secondary execution units are utilized the finer the potential granularity of the load adaptation and the power saving. In embodiments, the means for switching can be implemented as switch, electronic switch, power supply, etc.

In some embodiments the primary execution unit can be separated from a plurality of secondary execution units. In other words, a primary execution unit may provide system and control information and a plurality of secondary execution units may provide data transport. Primary and secondary execution units can be differently arranged over a coverage area. Moreover, in embodiments primary execution units may not be limited to transmission of control and system information, they may provide data transport as well.

In embodiments the component transmitters may have different maximum transmission power. Two or more of the component transmitters can be coupled to a common transmit antenna. In other words, two or more of the component transmitters may share one or more transmit antennas. In other embodiments the subsets of radio resources can comprise one or more common radio resources. That is to say, the component transmitters use different subsets of radio resources, with one or more common radio resources in the different subsets. Two or more of the transmitter components can be coupled to different transmit antennas. The transmission stage may comprise means for coordinating transmission of the two or more component transmitters coupled to the different transmit antennas on the common radio resource such that a coordinated spatial combination of the transmission signals is achieved. In other words, two or more component transmitters may use the same radio resource on different transmit antennas. The means for coordinating can be operable to coordinate the transmission on the two or more transmit antennas such that a beamforming, transmit diversity or Multiple-Input-Multiple-Output (MIMO) transmission is carried out. The means for coordinating can be implemented as a coordinator, a processor, a controller, etc.

In further embodiments the transmission stage may comply with a communication system. The transmission stage can then comprise a component transmitter as primary execution unit. The primary execution unit corresponds to a transmitter of the communication system with a first bandwidth. The transmission stage may further comprise one or more component transmitters as one or more secondary execution units. The secondary execution unit corresponds to a component transmitter of the communication system with a second bandwidth with a center frequency different from the one of the first bandwidth. The one or more secondary execution units may complement the first bandwidth of the primary execution unit to a bandwidth of the communication system. The transmission stage may comprise means for switching the secondary execution units on and off dependent on a load situation of the communication system.

In other words, the primary execution unit may establish a viable communication system using the first bandwidth towards associated users. The first bandwidth can be reduced compared to the bandwidth of the communication system. The other component transmitters, i.e. the secondary execution units, can be assigned to sub-bands for data transmission, which can then be switched on and off based on the data demand or load situation in the network. The bandwidth and therewith the capacity as well as the power consumption of the communication system can then be adjusted by switching the secondary execution units on and off. The more secondary execution units are utilized the finer the granularity of the load adaptation and the power saving. In embodiments, the means for switching can be implemented as switch, electronic switch, power supply, etc.

Embodiments may further provide a component transmitter for a transmission stage. The transmission stage can be in line with the above description and it can be operable to use a plurality of radio resources from a system bandwidth. The component transmitter comprises means for transmitting on a subset of the plurality of radio resources. The component transmitter can be operable to transmit on a subset of radio resources from the plurality of radio resources such that the subset of radio resources complements with another different set of radio resources used by one or more component transmitters to the plurality of radio resources of the system bandwidth.

In embodiments the transmission stage can be operable to use a plurality of subcarriers from a system bandwidth and the means for transmitting can be operable to transmit on a subset of the plurality of subcarriers. In other words, the component transmitter may use a subset of the sub-carriers. The sub-carriers of the subset may be adjacent to each other or they may form a discontinuous spectrum. Either way, they may form a continuous overall spectrum or bandwidth together or superimposed with one or more other component transmitters using different subsets. In other embodiments transmissions are organized in repetitive radio frames. The means for transmitting can be operable to insert a suppression period in a radio frame. That is to say, the transmission of the component transmitter can be discontinuous in the time domain, i.e. it may only use a subset of available sub-frames in a radio frame in line with was is described above.

In embodiments the means for transmitting can be operable to transmit a time domain transformed version of the subset of the subcarriers. Thus, in an OFDM system the subsets of radio resources may correspond to a subset of the sub-carriers of the OFDM spectrum. Moreover, the subsets of the sub-carriers may be transformed to the time domain separately by the component transmitters. In some embodiments such transformation, e.g. an Inverse Discrete Fourier Transformation (IDFT), can be used to transform the respective collection of sub-carriers from the frequency domain to the time domain. The time domain signals or symbol may then be converted from the baseband to the transmission band, e.g. by a mixer, and then transmitted by the means for transmitting. Cyclic prefix addition may be carried out prior to transmission in the base band. In embodiments a component transmitter may be operable to carry out one of or a combination of IDFT, cyclic prefix addition, base band to transmission band conversion, filtering, and/or power amplification. In some embodiments base band processing may be carried out at the component transmitter. In other embodiments base band processing can be carried out commonly for multiple component transmitters before the base band data for the respective subsets of radio resources are provided to the component transmitters.

Thus, in embodiments a component transmitter may further comprise means for converting a base band signal into a transmission band signal, e.g. in terms of a mixer or modulator. The component transmitter can comprise means for processing a base band signal based on user data signals, e.g. in terms of a base band processor, a Digital Signal Processor (DSP), a signal processor, a processor etc. Moreover, it may comprise means for amplifying the transmission band signal to obtain an amplified transmission band signal, e.g. in terms of a power amplifier. The amplified transmission band signal then comprises the subset of radio resources. The means for transmitting can be operable to insert a suppression period in a radio frame, e.g. when certain time resources are not used by the component transmitter.

The amplified transmission signal then comprises the suppression period in the repetitive radio frames.

In some embodiments the subsets may correspond to a combination of sub-carriers as a frequency domain radio resource and a subset of OFDM symbols as time domain radio resource. In the following a combination of sub-carriers and OFDM symbols may also be referred to as cluster of radio resources. As radio resources, e.g. sub-carriers and symbols, can be grouped to so-called resource elements in some communication systems, a cluster of radio resources may correspond to a combination of resource elements.

The component transmitter may comprise one or more transmit antennas. It may comprise means for synchronizing with another component transmitter, i.e. in terms of a synchronizer, a processor, a Phased Locked Loop (PLL), etc. The means for synchronizing may enable synchronization of the component transmitter to another component transmitter or a controller such that certain phase and amplitude differences can be achieved between the signals of two component carriers. In embodiments the component transmitter can comprise means for coordinating a MIMO transmission with another component transmitter, i.e. in terms of a DSP, a signal processor, etc. In other words, a component transmitter can be operable to participate in a MIMO transmission, being coordinated between two or more component transmitters and multiple receive antennas at a receiver. Thus, a component transmitter may be operable to enable a cooperative MIMO transmission, a stand-alone MIMO, or stand-alone MIMO and cooperative MIMO. The cooperation refers to multiple component transmitters in a transmission stage and it can also refer to multiple transmission stages. A component transmitter may also be operable to enable Active Antenna Array (AAA) transmission.

Embodiments also provide a transceiver, for example, a base station transceiver or a mobile station transceiver, which comprises the above transmission stage or one or more of the above component transmitters. Embodiments also provide a method for a transmission stage, which is operable to use a plurality of radio resources. The method comprises a step of transmitting separately using two or more subsets of radio resources from the plurality of radio resources. The two or more subsets of radio resources from the plurality of radio resources are different. The different subsets of radio resources complement to the plurality of radio resources.

Embodiments can further comprise a computer program having a program code for performing one of the above described methods when the computer program is executed on a computer or processor.

Embodiments may provide the advantage that power amplifiers can be operated mostly at a maximum or at least high utilization with the best possible or high efficiency. Embodiments may enable an operator to only switch on absolutely necessary hardware units or component transmitters, which can be additionally switched on when increased traffic occurs, and switched off again when the traffic decreases. Hardware components can be highly integrated and they may not need to be as powerful as those of a single transmitter base station transceiver. Moreover, embodiments may provide improved cooling conditions, in some embodiments passive cooling for a component transmitter or a transmission stage may be sufficient.

Embodiments can enable a flexible design in terms of hardware module association to hardware execution units or component transmitters. Bandwidth can be provided in parallel by single- and multi-antenna concepts. Furthermore a disconnection or separation of signaling and data transport can be enabled and carrier aggregation may easily be supported.

### Brief description of the Figures

Some other features or aspects will be described using the following non-limiting embodiments of apparatuses and/or methods and/or-computer programs by way ofexample only, and with reference to the accompanying figures, in which
Figure 1 shows an embodiment of a component transmitter;
Figure 2 shows an embodiment of a transmission stage;
Figure 3 illustrates subsets of radio resources as used by an embodiment;
Figure 4 illustrates resource clustering of embodiments;
Figure 5 illustrates a block diagram of an embodiment of a base station transceiver;
Figure 6 illustrates another block diagram of an embodiment with common base band processing at a base station transceiver;
Figure 7 illustrates another block diagram of an embodiment with separate base band processing at a base station transceiver;
Figure 8 depicts radio resource allocation in an embodiment;
Figure 9 depicts another radio resource allocation in an embodiment;
Figure 10 depicts another radio resource allocation in a network with embodiments;
Figure 11 shows a table with simulation results of embodiments; and
Figure 12 shows a flow chart of an embodiment of a method for a transmission stage.

### Description of some Embodiments

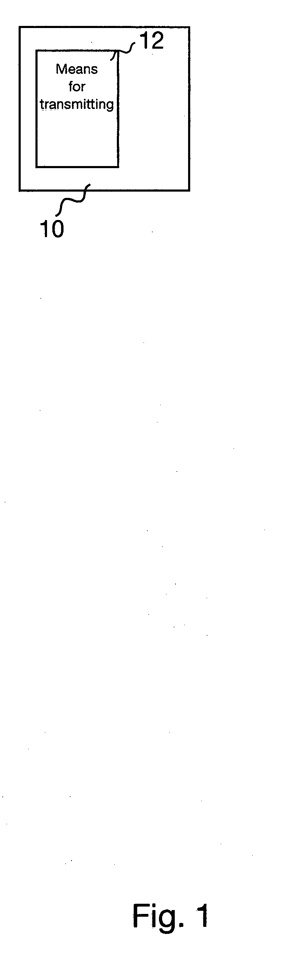

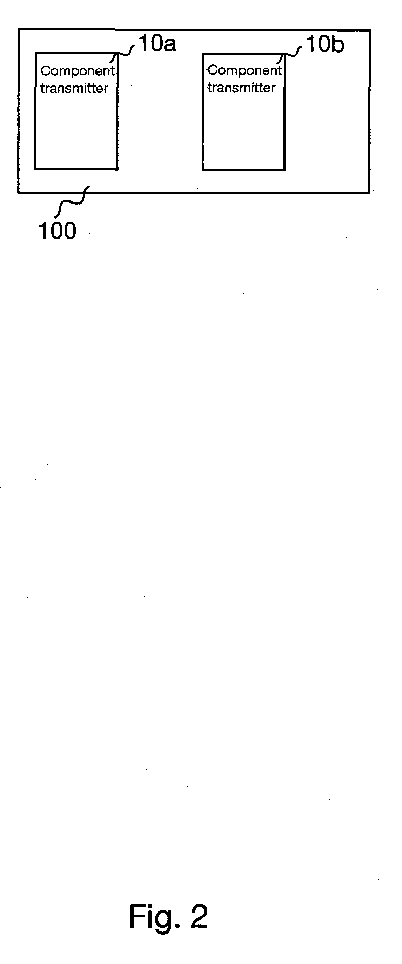

In the following some components will be shown in multiple Figures, where similar reference signs refer to similar components. Repetitive descriptions may be avoided for simplicity purposes. Figure 1 shows an embodiment of a component transmitter 10. The component transmitter 10 is for a transmission stage 100, an embodiment of which is further detailed in Figure 2. The transmission stage 100 is assumed to be operable to use a plurality of subcarriers from a system bandwidth. The component transmitter 10 comprises means for transmitting 12 on a subset of the plurality of subcarriers.

Figure 2 shows an embodiment of a transmission stage 100, which is operable to use a plurality of radio resources from a system bandwidth. The transmission stage 100 comprises two or more component transmitters 10a, 10b. A component transmitter 10a, 10b comprises means for transmitting 12 on a subset of the plurality of radio resources in line with Figure 1. The two or more component transmitters 10a, 10b are operable to transmit using different subsets of radio resources from the plurality of radio resources and the different subsets of radio resources complement one another to the plurality of radio resources of the system bandwidth.

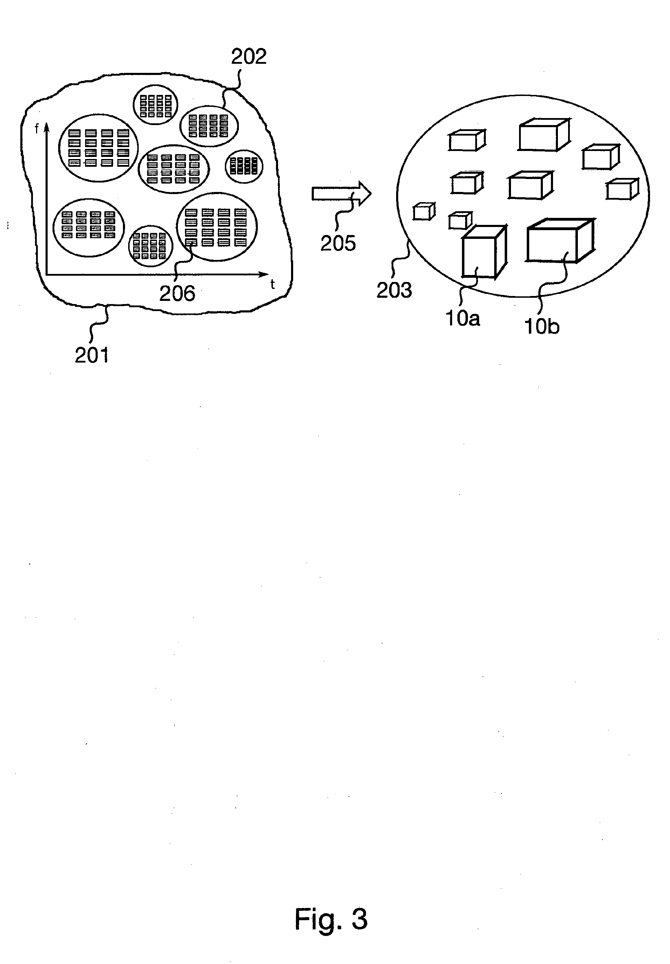

Figure 3 illustrates subsets of radio resources as used by an embodiment. In Figure 3 resource elements 206 are shown for simplicity only in a time-frequency plane. A transmission technique plane is not shown but it may also be considered that for every resource element 206 different transmission techniques can be used. Generally, the plurality of radio resources may correspond to one of or a combination of the group of time resources, frequency resources, coding resources or transmission techniques. A resource element 206 corresponds to a small abstract piece of a capability to transfer data 201, which is represented by the time-frequency plane, i.e. time and frequency resources which can be used to transmit data. Resource elements 206, which can also be called data containers, are grouped into clusters 202. The clusters 202 can then be flexibly assigned to execution units or component transmitters 10a, 10b of the execution pool 203 by an association function 205. In embodiments, the transmission stage 100 may comprise means for adapting the subsets of radio resources of the one or more component transmitters in line with the association function. The transmission stage 100 may comprise means for adapting component transmitters 10 with corresponding subsets or clusters 202, e.g. to optimize a power consumption of the transmission stage 100.

In the case, where only limited flexibility is required, the association function 205 can be replaced by static allocation of clusters 202 to execution units 10a, 10b and clusters 202 can be created from resource elements 206 by grouping them only in a time, only in a frequency or only in transmission technique domain. The plurality of radio resources may correspond to one of or a combination of the group of time resources, frequency resources, coding resources or transmission techniques Thus, in an embodiment the plurality of radio resources corresponds to a plurality of sub-carriers and a plurality of time slots, the two or more component transmitters 10a, 10b are operable to transmit on different subsets of combinations of subcarriers, time slots or transmission techniques, the resource elements 206.

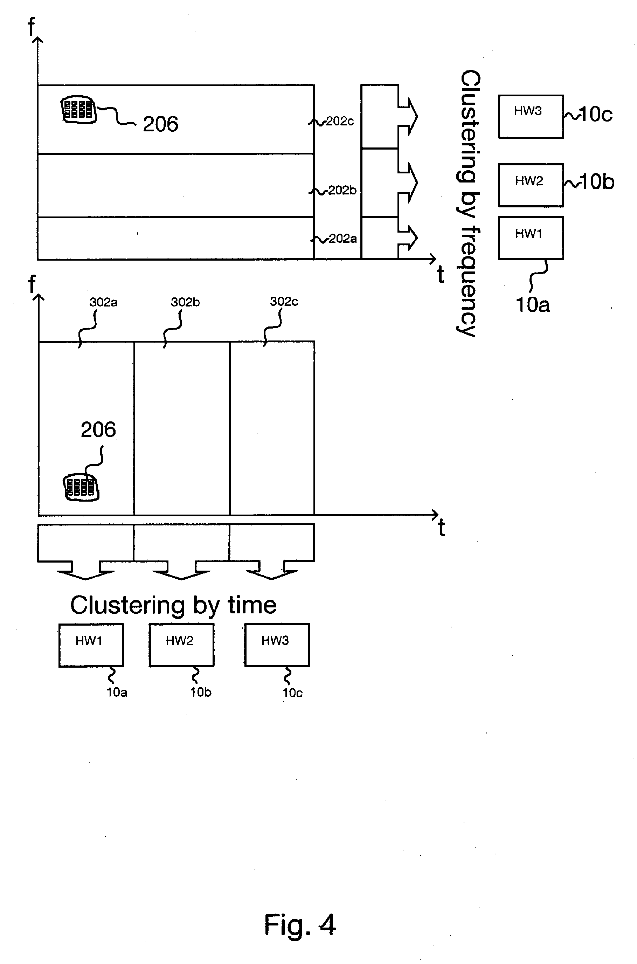

Figure 4 illustrates examples of radio resource clusters or subsets as they can be used by embodiments. Figure 4 shows two time-frequency planes, where the plane at the top illustrates clustering by frequency and the plane at the bottom illustrates clustering by time. As can be seen from the illustration at the top of Figure 4 the frequency domain is separated in multiple bands 202a, 202b, 202c, which correspond to the subsets or clusters. In a similar way, the illustration at the bottom shows a separation of the time domain, e.g. in multiple time slots or symbols 302a, 302b, 302c. Figure 4 shows clusters 202a, 202b, 202c, 302a, 302b, 302c of resource elements 206, which have been created by grouping of resource elements 206 by frequency band 202abc or by time period 302abc. In these embodiments, it is assumed that each cluster is statically assigned to a separate hardware, i.e. component transmitters 10a, 10b, 10c. This approach may make a practical implementation of embodiments simpler and cheaper.

In the embodiment at the top of Figure 4 the component transmitter 10a acts as primary execution unit, which corresponds to a transmitter with a reduced number of sub-carriers 202a compared to an overall number of sub-carriers of the transmission stage 100, which corresponds to the three clusters 202a, 202b, 202c. Furthermore, two transmitters 10b and 10c correspond to secondary execution units, the one or more secondary execution units 10b, 10c complement the reduced number of sub-carriers 202a to the overall number of sub-carriers 202a, 202b, 202c. The transmission stage comprises means for switching the secondary execution units 10b, 10c on and off dependent on a load situation of the transmission stage 100.

In the embodiment at the bottom of Figure 4 the plurality of radio resources corresponds to a plurality of time slots or symbols 302a, 302b, 302c in repetitive radio frames. The transmission stage 100 comprises a component transmitter 10a as primary execution unit, which corresponds to a transmitter transmitting in a subset of the plurality of time slots or symbols 302a in a radio frame 302a, 302b, 302c. The transmission stage 100 comprises two component transmitters 10b, 10c as secondary execution units. The secondary execution units 10b, 10c complement the subset of time slots or symbols 302a to the plurality of time slots or symbols 302a, 302b, 302c. The transmission stage 100 comprises means for switching the secondary execution units 10b, 10c on and off dependent on a load situation of the transmission stage 100. In this embodiment a component transmitter 10a, 10b, 10c may organize transmissions in repetitive radio frames. The means for transmitting 12 can be operable to insert a suppression period in a radio frame for the time resources which are assigned to other component transceivers.

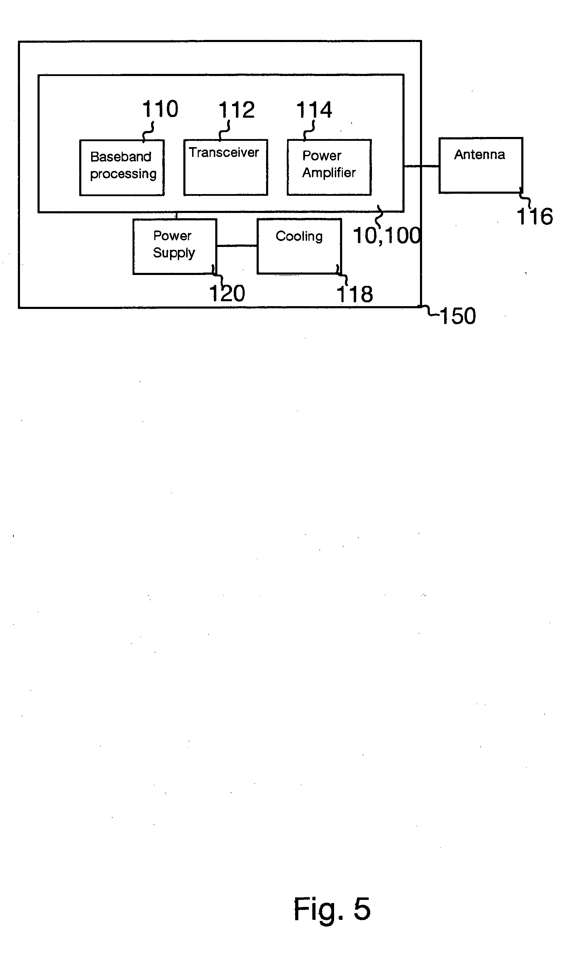

Figure 5 illustrates an embodiment of a base station transceiver150. The base station transceiver 150 comprises a transmission stage 100 with a component transmitter 10, where Figure 5 only shows a single component transmitter 10 identical to the transmission stage 100 for simplicity purposes.

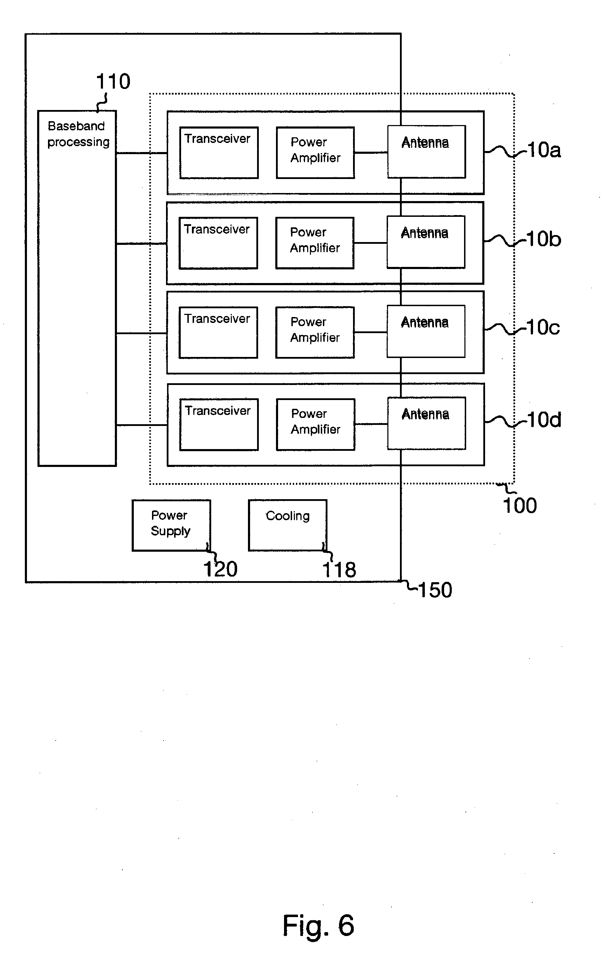

The main components of the base station transceiver150 are a baseband processing stage 110, a transceiver 112, a power amplifier 114, a transmit antenna 116, a cooling stage 118 and a power supply 120. In a conventional system, depending on requirements as a maximum traffic load, coverage and other parameters, the components of a base station transceiver150 are dimensioned correspondingly. In this embodiment the component transmitter 10 comprises means for converting 112 a base band signal into a transmission band signal, in terms of a transceiver. Moreover, the component transmitter 10 comprises means for amplifying 114 the transmission band signal to obtain an amplified transmission band signal, in terms of the power amplifier 114. Furthermore, the component transmitter 10 comprises means for processing 110 a base band signal based on user data signals, in terms of the base band processing stage 110. The component transmitter 10 may further comprise a transmit antenna 116 as shown in Figure 6, the component transmitter 10 may as well be coupled to an external antenna 116 as shown in Figure 5.

Figure 6 illustrates another block diagram of an embodiment of a base station transceiver150. The base station transceiver150 comprises a transmission stage 100. The transmission stage 100 comprises four component transmitters 10a, 10b, 10c, and 10d, which are also referred to as execution units. In the embodiment shown in Figure 6, each of the components transmitters 10a, 10b, 10c, and 10d, comprises a transceiver, a power amplifier, and an antenna, in line with Figure 5, reference signs for these components are omitted in Figure 6 for simplicity purposes. As opposed to Figure 5 the baseband processing 110 is carried out commonly for all four component transmitters10a, 10b, 10c, and 10d.

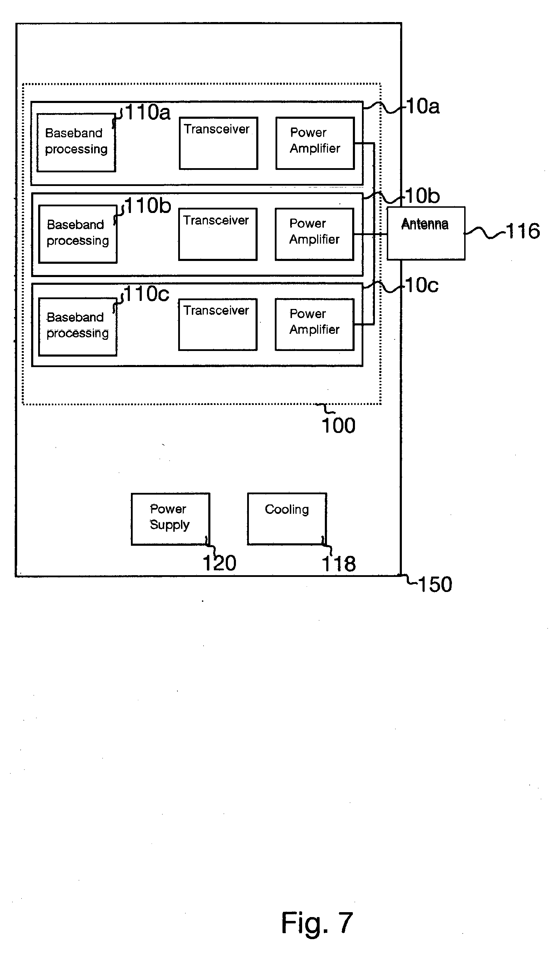

In embodiments baseband processing 110, transceiver 112, power amplifier 114, and transmit antenna 114 can be combined into a single execution unit or component transmitter 10abcd that is capable to serve a specific cluster 202 or subset. Other combinations of processing 110, transceiver 112, power amplifier 114 and antenna 116 are possible and depend on situation expedient. For example as shown in Figure 6 a single base band processing unit 110 can serve many processing units 10a, 10b, 10c, 10d, which can comprise transceiver 112, power amplifier 114 and antenna 116. Another block diagram of an embodiment is shown in Figure 7. Figure 7 shows similar components as Figure 6, except for separate base band processing units 110a, 110b, 110c in the component transmitters 10a, 10b, 10c instead of one common base band processing unit 110. In other words, in the embodiment of Figure 7 an execution unit 10a, 10b, 10c comprises a baseband processing unit 110a, 110b, 110c, a transceiver and a power amplifier, where the component amplifiers are connected to a single antenna 116.

In general, the component transmitters 10a, 10b, 10c, execution units respectively, can have different electrical parameters and can be stacked together into a transmission stage 100, which can be part of a base station transceiver 150. In other embodiments, the component transmitters may be located at different locations, e.g. in different remote radio heads. Moreover, in the Figures the component transmitters are displayed symmetrically, i.e. they comprise similar components and they have a similar structure. In other embodiments the different component transmitters can have different structures and they can comprise different components, e.g. one component transmitter may comprise a receiver and another component transceiver may not, one component transmitter may share a transmit antenna with another component transmitter and yet another may have an individual transmit antenna, etc.. Different electrical parameters can for example be used to support dynamic coverage and or better SINR at the cell boundary. In this case, execution units or component transmitters 10 responsible for the cell border can have higher transmission power as those responsible for the inner ring of the cell coverage area. Thus, the component transmitters 10abcd may have different maximum transmission powers. Users can then be assigned depending on their location to clusters 202abc associated with execution units 10 having adequate transmission power.

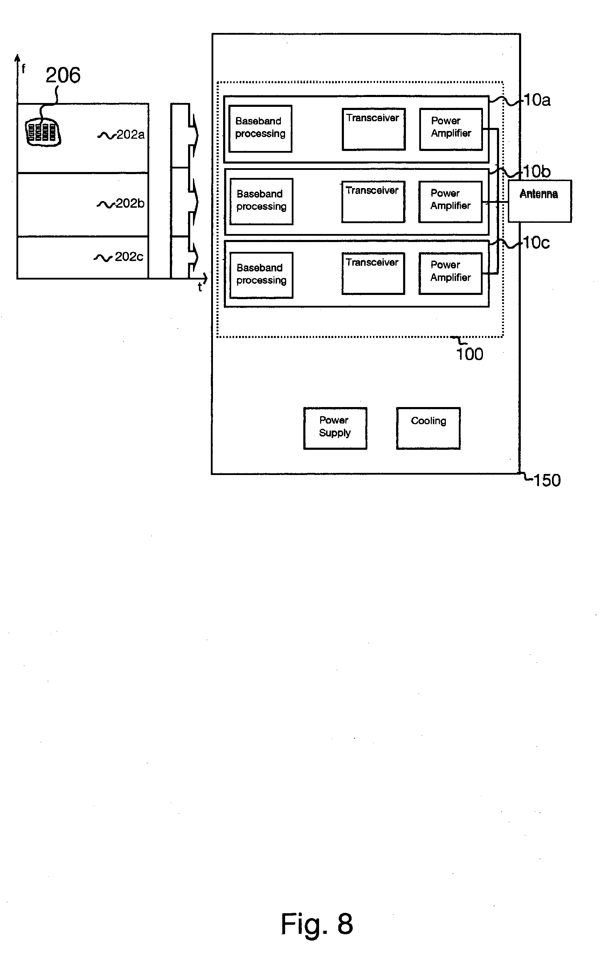

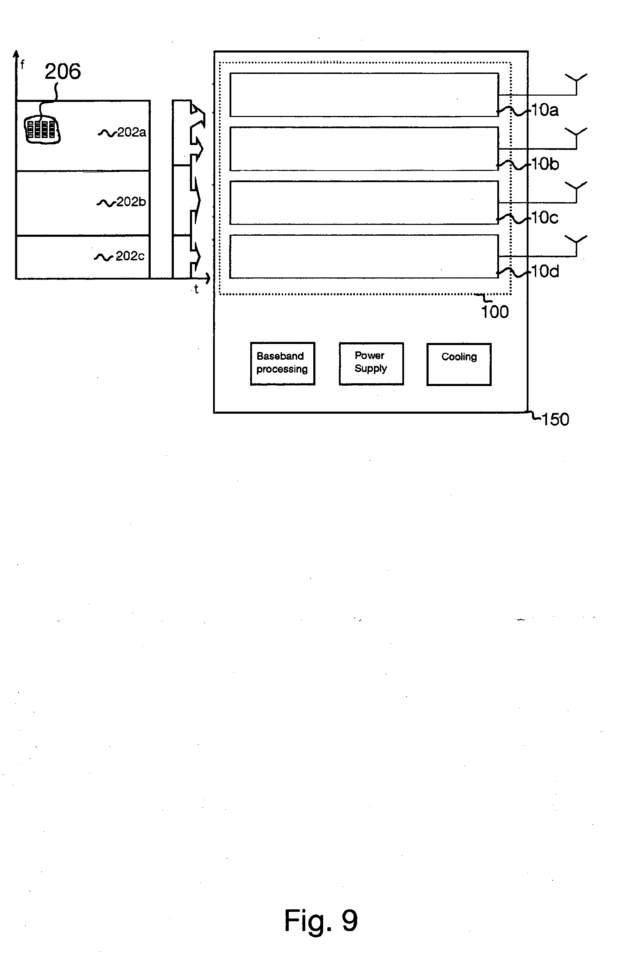

Allocating the clusters or subsets 202a, 202b, 202c, cf. Figure 4, to multiple execution units or component transmitters 10a, 10b, 10c, cf. Figure 7, can be used to empower focused capabilities of a base station transceiver 150. Figure 8 illustrates such resource allocation in an embodiment. Note, that Figure 8 shows the component transmitters to comprise similar components, which may not be the case in other embodiments. The subsets of frequency domain radio resources 202a, 202b, 202c are allocated to the component transmitters, 10a, 10b, and 10c, of the transmission stage 100 at a base station transceiver 150. Figure 9 depicts another radio resource allocation in an embodiment. In Figure 9 a base station transceiver 150 comprises a transmission stage 100 with four component transmitters 10a, 10b 10c, and 10d. As further shown in Figure 9, cluster or subset 202a is assigned to two execution units or component transmitters 10a and 10b. As a result, transmission power for the cluster or subset 202a is increased assuming the component transmitters 10a, 10b, 10c, and 10d dispose the same transmission power.

Moreover, MIMO capability can be activated for the subset 202a. In other embodiments MIMO capability can also be supported by a single execution unit or component transmitter 10abcd. The transmission stage 100 or a component transmitter 10a then comprises means for synchronizing with another component transmitter and/or means for coordinating a multiple-input-multiple-output transmission with another component transmitter 10b, 10c, 10d. Execution units or component transmitters 10a, 10b, 10c, 10d can be switched on and off depending on traffic load or required coverage. This feature can be used to optimize energy consumption.

The subsets of radio resources can comprise one or more common radio resources, wherein two or more of the component transmitters 10a, 10b, 10c, 10d are coupled to different transmit antennas, as it is shown in Figures 6 and 9. The transmission stage 100 can comprise means for coordinating transmission of the two or more component transmitters 10a, 10b coupled to the different transmit antennas on the common radio resource such that a coordinated spatial combination of the transmission signals is achieved, as, for example, for beamforming or MIMO transmission purposes.

In other embodiments there can also be execution units or component transmitters 10 specialized to support specific services and using specific transmission methods. This would allow efficient utilization of a used frequency band. Thus, in such an embodiment the transmission stage 100 comprises a component transmitter 10a as primary execution unit with a reduced number of sub-carriers compared to an overall number of sub-carriers of the transmission stage 100, cf. for example Figure 7. The sub-carriers in this embodiment would not have to form a continuous spectrum, they can as well be separated from each other, e.g. in an interlaced manner. The transmission stage 100 further comprises one or more component transmitters 10b, 10c, 10d as one or more secondary execution units, the one or more secondary execution units complementing the reduced number of sub-carriers to the overall number of sub-carriers. The transmission stage 100 may further comprise means for switching the secondary execution units 10b, 10c, 10d on and off dependent on a load situation of the transmission stage 100.

In another embodiment clusters or subsets 302abc can be grouped in the time domain. Such embodiments may achieve a better exploitation of used components and their characteristic, for example, by pulse operation. Energy savings may also be supported in a very efficient way. In such an embodiment the transmission stage 100 can comprises a component transmitter 10a as primary execution unit transmitting in a subset of the plurality of time slots or symbols 302a in a radio frame, cf. Figure 4 at the bottom. The transmission stage 100 can comprise one or more component transmitters 10b, 10c as one or more secondary execution units complementing the subset of time slots or symbols to the plurality of time slots or symbols. The transmission stage 100 may comprise means for switching the secondary execution units 10b, 10c on and off dependent on a load situation of the transmission stage 100.

For example, if a base station transceiver 150 uses five execution units or component transmitters 10, each of which serves a bandwidth of 2MHz, 4 of the 5 execution units may be switched off if a traffic load requires less than 2 MHz of bandwidth, e.g. during certain day- or night times. In this way, considerable energy savings can be made during a day. The transmission stage 100 or the base station transceiver can be operable to comply with a communication system as, for example, UMTS, LTE, LTE-A, etc.

The transmission stage 100 may then comprise a component transmitter 10a as primary execution unit with a first bandwidth, and one or more component transmitters 10b, 10c as one or more secondary execution units with a second bandwidth different from the first bandwidth. The one or more secondary execution units 10b, 10c complement the bandwidth of the primary execution unit to a bandwidth of the communication system. The transmission stage 100 can comprise means for switching the secondary execution units 10b, 10c on and off dependent on a load situation of the communication system.

Component transmitters or execution units 10a, 10b, 10c, 10d can use MIMO and Single-Input-Single Output (SISO) antennas. In some embodiments there is one antenna system per execution unit 10, but other solutions are also possible. In the case of lower load it is possible to use two or more execution units 10a, 10b for the same bandwidth, cf. Figure 9, by reconfiguration of the digital part and to combine them for MIMO. Embodiments may therefore also support carrier aggregation concept of 3GPP Rel.10.

Embodiments may abstract data transport resources in a frequency and time domain onto multiple hardware execution units or component transmitters to allow performance scaling by flexible bandwidth utilization, scalable processing power, scalable transmit power, scalable transmission method, component deactivation and scalable coverage.

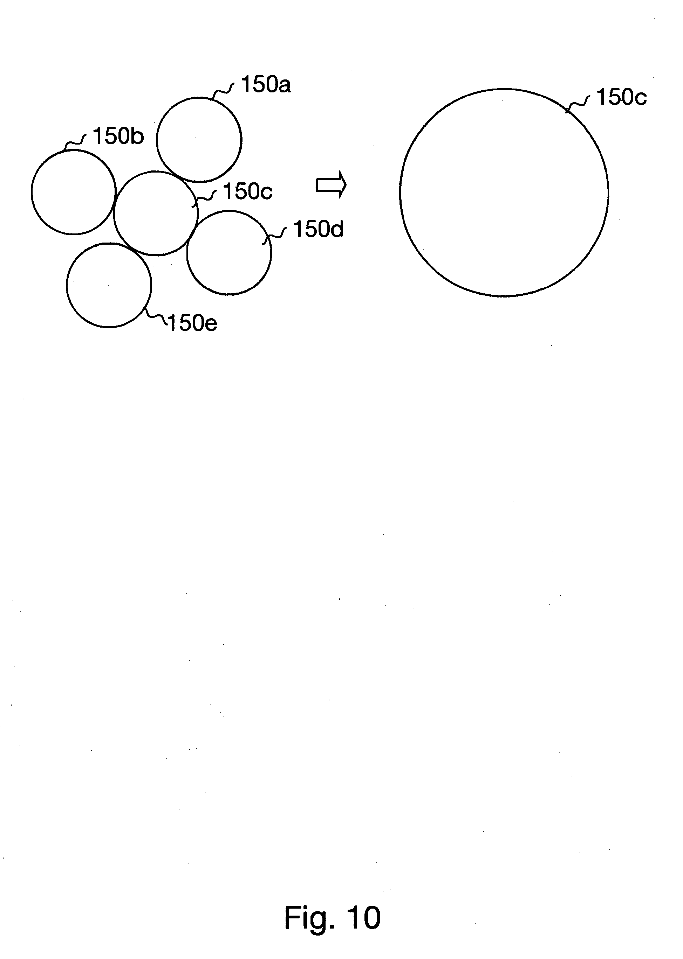

Figure 10 depicts another radio resource allocation in a network with embodiments. On the left hand side of Figure 10 there are five base station transceivers with coverage areas 150a, 150b, 150c, 150d, 150e, which are assumed to operate simultaneously to provide services to their respective coverage areas. During a low load situation most of the BSs can be switched off and the remaining BSs 150c can adopt its transmission for a larger coverage, which is indicated on the right hand side of Figure 10.

In the following simulation results will be presented. In a network scenario it was assumed, that a base station (BS) transceiver hardware implements a bandwidth of 10MHz and the BS hardware constitutes of execution units, i.e. component transmitters 10. There is one primary execution unit (PEU) and any number of secondary execution units (SEU). The physical model of the PEU is equivalent to the physical model of a 1,4 MHz LTE BS. The physical model of the SEU is equivalent to the physical model of physical resource blocks in LTE. The number of SEU depends on HW design. The following concepts of SEU are considered: 1.0*1MHz, 5*2 MHz, 3*3 MHz, 2*5 MHz and 1*10MHz

All calculations have been made for a single BS of ca. 10 MHz bandwidth. The transmit power per resource element is assumed constant in every execution unit or component transmitter and corresponds to transmit power per resource element of a 10MHz BS.

As Radio Resource Management (RRM) "strategies for traffic load processing a load distribution over execution units was considered in two different ways. The first option assumes a full utilization of active execution units, i.e. a new execution unit when switched on, is only utilized partly, while all others are utilized to their full capacity. The second option assumes symmetric utilization over all active execution units. The load of the resource elements was generated either using an opportunistic scheduler or a Discontinuous Transmission (DTX) scheduler.

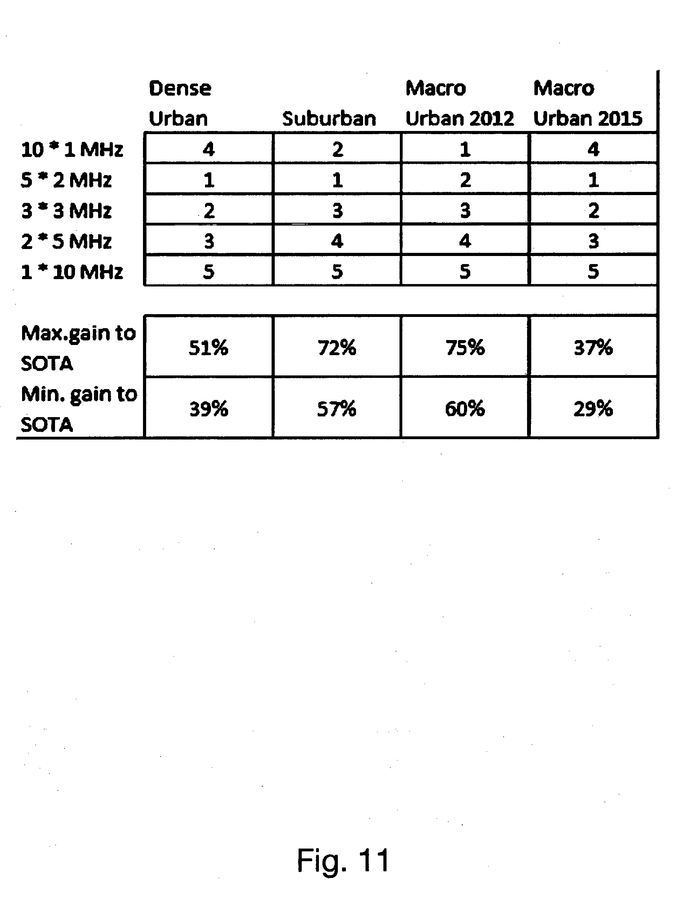

Figure 11 shows a table with simulation results of embodiments. In areas with higher traffic load (dense urban, macro urban 2015) the best hardware for a BS is the hardware composed of 5*2 MHz execution units or component transmitters. For lower differences in traffic load or in the area with low load (suburban, macro urban 2015) the best hardware is composed of 5*2 MHz execution units. Generally, 5*2 MHz hardware seems to be the best overall hardware solution. Bandwidth can be provided in parallel by Single-Input-Single-Output (SISO) and by MIMO. Figure 11 shows the ranking of the different embodiments (2*5MHz with 2 5MHz-component transmitters, 3*3MHz with 3 3MHz-component transmitters, 5*2MHz with 5 2MHz-component transmitters, and 10*1MHz with 10 1MHz-component transmitters) for four different traffic models (dense urban, suburban, macro urban 2012, and macro urban 2015). The table also displays the ranking for a 10MHz-BS as State Of The Art (SOTA). The two rows at the bottom of Figure 11 show the maximum and minimum gain as compared to the 10MHz-BS.

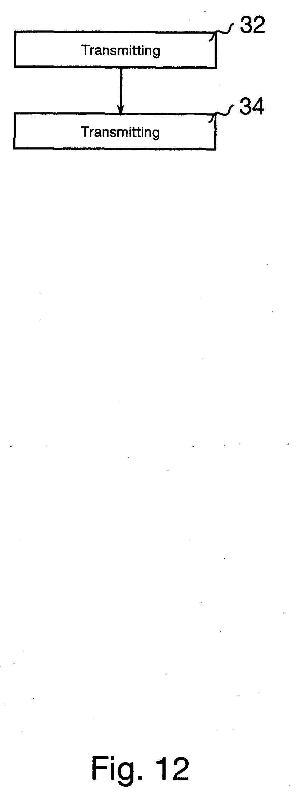

Embodiments may also provide a method for a transmission stage 100. Figure 12 shows a flow chart of an embodiment of a method for a transmission stage. The transmission stage 100 is operable to use a plurality of radio resources. The method comprises steps of transmitting 32, 34 separately using two or more subsets of radio resources from the plurality of radio resources, wherein the two or more subsets of radio resources from the plurality of radio resources are different, and wherein the different subsets of radio resources complement to the plurality of radio resources. In other words, the method comprises a first step of transmitting 32 using a first subset of radio resources from the plurality of radio resources, and a second step of transmitting 34 using a second subset of radio resources from the plurality of radio resources. The first and the second subsets are different and they complement, potentially together with other subsets, to the plurality of radio resources.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transmitting", "means for adapting", "means for switching", "means for coordinating", "means for synchronizing", "means for converting", "means for amplifying", "means for processing", etc., may be provided through the use of dedicated hardware, such as "a transmitter", "an adaptor", "a switch", "an coordinator", "a synchronizer", "a converter", "an amplifier", "a processor", "a controller ", "a DSP", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A transmission stage (100) for a base station transceiver of a communication system, the transmission stage (100) being operable to use a plurality of radio resources from a system bandwidth and comprising two or more component transmitters (10; 10a; 10b; 10c; 10d), a component transmitter (10; 10a; 10b; 10c; 10d) comprising means for transmitting (12) on a subset (202a; 202b; 202c; 302a; 302b; 302c) of the plurality of radio resources, wherein the two or more component transmitters (10; 10a; 10b; 10c; 10d) are operable to transmit using different subsets (202a; 202b; 202c; 302a; 302b; 302c) of radio resources from the plurality of radio resources and wherein the different subsets (202a; 202b; 202c; 302a; 302b; 302c) of radio resources complement one another to the plurality of radio resources of the system bandwidth, wherein the transmission stage (110) is operable to transmit using at least one of the component transmitters (10; 10a; 10b; 10c; 10d) to provide control and system information to make the system accessible to users, and to additionally switch at least one other of the component transmitters (10; 10a; 10b; 10c; 10d) on and off for data transmission.

2. The transmission stage (100) of claim 1, wherein the transmission stage (100) comprises means for adapting the subsets (202a; 202b; 202c; 302a; 302b; 302c) of radio resources of the one or more component transmitters (10; 10a; 10b; 10c; 10d) and/or wherein the plurality of radio resources corresponds to one of or a combination of the group of time resources, frequency resources, coding resources or transmission techniques.

3. The transmission stage (100) of claim 1, wherein the plurality of radio resources corresponds to a plurality of subcarriers and a plurality of time slots, and wherein the two or more component transmitters (10; 10a; 10b; 10c; 10d) are operable to transmit on different subsets (202a; 202b; 202c; 302a; 302b; 302c), which comprise different combinations of subcarriers and time slots.

4. The transmission stage (100) of claim 1, comprising a component transmitter (10; 10a; 10b; 10c; 10d) as primary execution unit, the primary execution unit (10; 10a; 10b; 10c; 10d) corresponding to a transmitter with a reduced number of sub-carriers (202a; 202b; 202c) compared to an overall number of sub-carriers of the transmission stage (100), and one or more component transmitters (10; 10a; 10b; 10c; 10d) as one or more secondary execution units, the one or more secondary execution units (10; 10a; 10b; 10c; 10d) complementing the reduced number of sub-carriers (202a; 202b; 202c) to the overall number of sub-carriers, and wherein the transmission stage (100) comprises means for switching the secondary execution units (10; 10a; 10b; 10c; 10d) on and off dependent on a load situation of the transmission stage (100).

5. The transmission stage (100) of claim 1, wherein the plurality of radio resources corresponds to a plurality of time slots or symbols in repetitive radio frames and wherein the transmission stage (100) comprises a component transmitter (10; 10a; 10b; 10c; 10d) as primary execution unit, the primary execution unit (10; 10a; 10b; 10c; 10d) corresponding to a transmitter transmitting in a subset of the plurality of time slots or symbols (302a; 302b; 302c) in a radio frame, and one or more component transmitters (10; 10a; 10b; 10c; 10d) as one or more secondary execution units, the one or more secondary execution units (10; 10a; 10b; 10c; 10d) complementing the subset of time slots or symbols (302a; 302b; 302c) to the plurality of time slots or symbols, and wherein the transmission stage (100) comprises means for switching the secondary execution units (10; 10a; 10b; 10c; 10d) on and off dependent on a load situation of the transmission stage (100).

6. The transmission stage (100) of claim 1, wherein the component transmitters (10; 10a; 10b; 10c; 10d) have different maximum transmission powers and/or wherein two or more of the component transmitters (10; 10a; 10b; 10c; 10d) are coupled to a transmit antenna.

7. The transmission stage (100) of claim 1, wherein the subsets of radio resources (202a; 202b; 202c; 302a; 302b; 302c) comprise one or more common radio resources, wherein two or more of the component transmitters (10; 10a; 10b; 10c; 10d) are coupled to different transmit antennas, and wherein the transmission stage (100) comprises means for coordinating transmission of the two or more component transmitters (10; 10a; 10b; 10c; 10d) coupled to the different transmit antennas on the one or more common radio resources (202a; 202b; 202c; 302a; 302b; 302c) such that a coordinated spatial combination of the transmission signals is achieved.

8. The transmission stage (100) of claim 1, being operable in a communication system and comprising a component transmitter (10; 10a; 10b; 10c; 10d) as primary execution unit, the primary execution unit (10; 10a; 10b; 10c; 10d) corresponding to a transmitter of the communication system with a first bandwidth, and one or more component transmitters (10; 10a; 10b; 10c; 10d) as one or more secondary execution units, the one or more secondary execution unit (10; 10a; 10b; 10c; 10d) corresponding to a transmitter of the communication system with a second bandwidth different from the first bandwidth, the one or more secondary execution units (10; 10a; 10b; 10c; 10d) complementing the bandwidth of the primary execution unit to a bandwidth of the communication system, and wherein the transmission stage (100) comprises means for switching the secondary execution units on and off dependent on a load situation of the communication system.

9. A transceiver (150) comprising the transmission stage (100) of claim 1.

10. A method for a transmission stage (100) for a base station transceiver of a communication system, the transmission stage (100), the transmission stage (100) being operable to use a plurality of radio resources, the method comprising
transmitting (32; 34) separately using two or more subsets of radio resources (202a; 202b; 202c; 302a; 302b; 302c) from the plurality of radio resources, wherein the two or more subsets of radio resources (202a; 202b; 202c; 302a; 302b; 302c) from the plurality of radio resources are different, and wherein the different subsets of radio resources complement to the plurality of radio resources, wherein the transmitting (32; 34) comprises transmitting using at least one of the component transmitters (10; 10a; 10b; 10c; 10d) to provide control and system information to make the system accessible to users; and additionally switching at least one other of the component transmitters (10; 10a; 10b; 10c; 10d) on and off for data transmission.

11. A computer program having a program code for performing the method of claim 10, when the computer program is executed on a computer or processor.

## Patentansprüche

1. Übertragungsstufe (100) für einen Basisstations-Transceiver eines Kommunikationssystems, wobei die Übertragungsstufe (100) für die Verwendung einer Vielzahl von Funkressourcen aus einer Systembandbreite betreibbar ist und zwei oder mehr Komponentensender (10; 10a; 10b; 10c; 10d) umfasst, wobei ein Komponentensender (10; 10a; 10b; 10c; 10d) Mittel zum Übertragen (12) auf einer Teilmenge (202a; 202b; 202c; 302a; 302b; 302c) der Vielzahl von Funkressourcen umfasst, wobei die zwei oder mehr Komponentensender (10; 10a; 10b; 10c; 10d) für die Übertragung unter Verwendung unterschiedlicher Teilmengen (202a; 202b; 202c; 302a; 302b; 302c) von Funkressourcen aus der Vielzahl von Funkressourcen betreibbar sind, und wobei sich die unterschiedlichen Teilmengen (202a; 202b; 202c; 302a; 302b; 302c) von Funkressourcen gegenseitig zu der Vielzahl von Funkressourcen der Systembandbreite ergänzen, wobei die Übertragungsstufe (110) zum Übertragen unter Verwendung mindestens eines der Komponentensender (10; 10a; 10b; 10c; 10d) betreibbar ist, um Steuer- und Systeminformationen bereitzustellen, um das System Benutzern zugänglich zu machen, und um zusätzlich Ein- und Ausschalten mindestens einen anderen der Komponentensender (10, 10a; 10b; 10c; 10d) für die Datenübertragung ein- und auszuschalten.

2. Übertragungsstufe (100) nach Anspruch 1, wobei die Übertragungsstufe (100) Mittel zum Anpassen der Teilmengen (202a; 292b; 202c; 302a; 302b; 302c) von Funkressourcen des einen oder der mehreren Komponentensender (10; 10a; 10b; 10c; 10d) umfasst, und/oder wobei die Vielzahl von Funkressourcen entweder Zeitressourcen, Frequenzressourcen, Codierungsressourcen oder Übertragungstechniken oder einer Kombination dieser Gruppe entspricht.

3. Übertragungsstufe (100) nach Anspruch 1, wobei die Vielzahl von Funkressourcen einer Vielzahl von Unterträgern und einer Vielzahl von Zeitschlitzen entspricht, und wobei die zwei oder mehr Komponentensender (10, 10a; 10b; 10c; 10d) für die Übertragung auf unterschiedlichen Teilmengen (202a; 202b; 202c; 302a; 302b; 302c), welche unterschiedliche Kombinationen von Unterträgern und Zeitschlitzen umfassen, betreibbar sind.

4. Übertragungsstufe (100) nach Anspruch 1, umfassend einen Komponentensender (10, 10a; 10b; 10c; 10d) als eine primäre Ausführungseinheit, wobei die primäre Ausführungseinheit (10, 10a; 10b, 10c; 10d) einem Sender mit einer im Vergleich zu einer Gesamtanzahl von Unterträgern der Übertragungsstufe (100) reduzierten Anzahl von Unterträgern (202a; 202b; 202c) entspricht, und einen oder mehrere Komponentensender (10, 10a; 10b; 10c; 10d) als eine oder mehrere sekundäre Ausführungseinheit, wobei die eine oder mehreren sekundären Ausführungseinheiten (10, 10a; 10b; 10c; 10d) die reduzierte Anzahl von Unterträgern (202a; 202b; 202c) zu der Gesamtanzahl von Unterträgern ergänzen, und wobei die Übertragungsstufe (100) Mittel zum Ein- und Ausschalten der sekundären Ausführungseinheiten (10, 10a; 10b; 10c; 10d) in Abhängigkeit von einer Lastsituation der Übertragungsstufe (100) umfasst.

5. Übertragungsstufe (100) nach Anspruch 1, wobei die Vielzahl von Funkressourcen einer Vielzahl von Zeitschlitzen oder Symbolen in repetitiven Funkrahmen entspricht, und wobei die Übertragungsstufe (100) einen Komponentensender (10, 10a; 10b; 10c; 10d) als primäre Ausführungseinheit, wobei die primäre Ausführungseinheit (10, 10a; 10b; 10c; 10d) einem Sender, welcher in einer Teilmenge der Vielzahl von Zeitschlitzen oder Symbolen (302a; 302b; 302c) in einem Funkrahmen überträgt, entspricht, und einen oder mehrere Komponentensender (10, 10a; 10b; 10c; 10d) als eine oder mehrere sekundäre Ausführungseinheiten umfasst, wobei die eine oder mehreren sekundären Ausführungseinheiten (10, 10a; 10b; 10c; 10d) die Teilmenge von Zeitschlitzen oder Symbolen (302a; 302b; 302c) zu der Vielzahl von Zeitschlitzen oder Symbolen ergänzen, und wobei die Übertragungsstufe (100) Mittel zum Ein- und Ausschalten der sekundären Ausführungseinheiten (10, 10a; 10b; 10c; 10d) in Abhängigkeit von einer Lastsituation der Übertragungsstufe (100) umfasst.

6. Übertragungsstufe (100) nach Anspruch 1, wobei die Komponentensender (10, 10a; 10b; 10c; 10d) unterschiedliche maximale Sendeleistungen aufweisen, und/oder wobei zwei oder mehr der Komponentensender (10, 10a; 10b; 10c; 10d) an eine Sendeantenne gekoppelt sind.

7. Übertragungsstufe (100) nach Anspruch 1, wobei die Teilmengen von Funkressourcen (202a; 202b; 202c; 302a; 302b; 302c) eine oder mehrere gemeinsame Funkressourcen umfassen, wobei zwei oder mehr der Komponentensender (10, 10a: 10b; 10c; 10d) an unterschiedliche Sendeantennen gekoppelt sind, und wobei die Übertragungsstufe (100) Mittel zur Koordination der Übertragung der zwei oder mehr Komponentensender (10, 10a; 10b; 10c; 10d), welche an die unterschiedlichen Sendeantennen gekoppelt sind, auf der einen oder mehreren gemeinsamen Funkressourcen (202a; 202b; 202c; 302a; 302b; 302c) umfasst, so dass eine koordinierte räumliche Kombination der Sendesignale erreicht wird.

8. Übertragungsstufe (100) nach Anspruch 1, welche in einem Kommunikationssystem betreibbar ist und einen Komponentensender (10, 10a; 10b; 10c; 10d) als primäre Ausführungseinheit, wobei die primäre Ausführungseinheit (10, 10a; 10b; 10c; 10d) einem Sender des Kommunikationssystems mit einer ersten Bandbreite entspricht, und einen oder mehrere Komponentensender (10, 10a; 10b; 10c; 10d) als eine oder mehrere sekundäre Ausführungseinheiten umfasst, wobei die eine oder mehreren sekundären Ausführungseinheiten (10, 10a; 10b; 10c; 10d) einem Sender des Kommunikationssystems mit einer zweiten Bandbreite, welche sich von der ersten Bandbreite unterscheidet, entsprechen, wobei die eine oder mehreren sekundären Ausführungseinheiten (10, 10a; 10b, 10c; 10d) die Bandbreite der primären Ausführungseinheit zu einer Bandbreite des Kommunikationssystems ergänzen, und wobei die Übertragungsstufe (100) Mittel zum Ein- und Ausschalten der sekundären Ausführungseinheiten in Abhängigkeit von einer Lastsituation des Kommunikationssystems umfasst.

9. Transceiver (150) mit einer Übertragungsstufe (100) gemäß Anspruch 1.

10. Verfahren für eine Übertragungsstufe (100) für einen Basisstations-Transceiver eines Kommunikationssystems, wobei die Übertragungsstufe (100) für die Verwendung einer Vielzahl von Funkressourcen betreibbar ist, wobei das Verfahren umfasst:
Übertragen (32; 34) unter separater Verwendung von zwei oder mehr Teilmengen von Funkressourcen (202a; 202b; 202c; 302a; 302b; 302c) aus der Vielzahl von Funkressourcen, wobei die zwei oder mehr Teilmengen von Funkressourcen (202a; 202b; 202c; 302a; 302b; 302c) aus der Vielzahl von Funkressourcen unterschiedlich sind, und wobei sich die unterschiedlichen Teilmengen von Funkressourcen zu der Vielzahl von Funkressourcen ergänzen, wobei das Übertragen (32; 34) das Übertragen unter Verwendung mindestens eines der Komponentensender (10, 10a; 10b; 10c; 10d) umfasst, um Steuer- und Systeminformationen bereitzustellen, um das System für Benutzer zugänglich zu machen; und
Zusätzliches Ein- und Ausschalten mindestens eines der Komponentensender (10, 10a; 10b; 10c; 10d) für die Datenübertragung.

11. Computerprogramm mit einem Programmcode zum Durchführen des Verfahrens gemäß Anspruch 10, wenn das Computerprogramm auf einem Computer oder Prozessor ausgeführt wird.

## Revendications

1. Étape de transmission (100) pour un émetteur/récepteur de station de base d'un système de communication, l'étape de transmission (100) permettant d'utiliser une pluralité de ressources radio à partir d'une bande passante du système et comprenant au moins deux émetteurs de composants (10; 10a ; 10b ; 10c ; 10d), un émetteur de composants (10 ; 10a ; 10b ; 10c ; 10d) comprenant des moyens pour transmettre (12) sur un sous-ensemble (202a ; 202b ; 202c; 302a ; 302b ; 302c) de la pluralité de ressources radio, dans laquelle les au moins deux émetteurs de composants (10 ; 10a ; 10b ; 10c ; 10d) permettent de transmettre en utilisant des sous-ensembles différents (202a ; 202b ; 202c ; 302a ; 302b ; 302c) de ressources radio parmi la pluralité de ressources radio et dans laquelle les sous-ensembles différents (202a ; 202b ; 202c; 302a ; 302b ; 302c) de ressources radio se complètent avec la pluralité de ressources radio de la bande passante du système, dans laquelle l'étape de transmission (110) permet de transmettre en utilisant au moins un des émetteurs de composants (10 ; 10a; 10b ; 10c ; 10d) pour fournir des informations de commande et de système pour rendre le système accessible aux utilisateurs, et en outre pour activer ou désactiver au moins un autre des émetteurs de composants (10 ; 10a ; 10b ; 10c; 10d) pour la transmission de données.

2. Étape de transmission (100) selon la revendication 1, dans laquelle l'étape de transmission (100) comprend des moyens pour adapter les sous-ensembles (202a ; 202b ; 202c ; 302a ; 302b ; 302c) de ressources radio du ou des émetteurs de composants (10 ; 10a ; 10b ; 10c ; 10d) et/ou dans laquelle la pluralité de ressources radio correspond à un élément parmi ou à une combinaison du groupe constitué de ressources de temps, de ressources de fréquence, de ressources de codage ou de techniques de transmission.

3. Étape de transmission (100) selon la revendication 1, dans laquelle la pluralité de ressources radio correspond à une pluralité de sous-porteuses et à une pluralité de créneaux temporels, et dans laquelle les au moins deux émetteurs de composants (10 ; 10a ; 10b ; 10c ; 10d) permettent de transmettre sur des sous-ensembles différents (202a ; 202b ; 202e ; 302a ; 302b ; 302c), qui comprennent des combinaisons différentes de sous-porteuses et de créneaux temporels.

4. Étape de transmission (100) selon la revendication 1 comprenant un émetteur de composants (10 ; 10a ; 10b ; 10c ; 10d) en tant qu'unité d'exécution primaire, l'unité d'exécution primaire (10 ; 10a ; 10b ; 10c ; 10d) correspondant à un émetteur ayant un nombre réduit de sous-porteuses (202a ; 202b ; 202c) par rapport à un nombre global de sous-porteuses de l'étape de transmission (100), et un ou plusieurs émetteurs de composants (10; 10a ; 10b ; 10c ; 10d) en tant qu'une ou plusieurs unités d'exécution secondaires, la ou les unités d'exécution secondaires (10 ; 10a ; 10b ; 10c ; 10d) complétant le nombre réduit de sous-porteuses (202a ; 202b ; 202c) avec le nombre global de sous-porteuses, et dans laquelle l'étape de transmission (100) comprend des moyens pour activer et désactiver les unités d'exécution secondaires (10 ; 10a ; 10b ; 10c ; 10d) en fonction d'une situation de charge de l'étape de transmission (100).

5. Étape de transmission (100) selon la revendication 1, dans laquelle la pluralité de ressources radio correspond à une pluralité de créneaux temporels ou de symboles dans des trames radio répétitives et dans laquelle l'étape de transmission (100) comprend un émetteur de composants (10 ; 10a ; 10b ; 10c ; 10d) en tant qu'unité d'exécution primaire, l'unité d'exécution primaire (10 ; 10a ; 10b ; 10c ; 10d) correspondant à un émetteur transmettant dans un sous-ensemble de la pluralité de créneaux temporels ou de symboles (302a ; 302b ; 302c) dans une trame radio, et un ou plusieurs émetteurs de composants (10 ; 10a ; 10b ; 10c ; 10d) en tant qu'une ou plusieurs unités d'exécution secondaires, la ou les unités d'exécution secondaires (10 ; 10a ; 10b ; 10c ; 10d) complétant le sous-ensemble de créneaux temporels ou de symboles (302a ; 302b; 302c) avec la pluralité de créneaux temporels ou de symboles, et dans laquelle l'étape de transmission (100) comprend des moyens pour activer ou désactiver les unités d'exécution secondaires (10 ; 10a ; 10b ; 10c ; 10d) en fonction d'une situation de charge de l'étape de transmission (100).

6. Étape de transmission (100) selon la revendication 1, dans laquelle les émetteurs de composants (10 ; 10a ; 10b ; 10c ; 10d) ont des puissances de transmission maximum différentes et/ou dans laquelle au moins deux des émetteurs de composants (10 ; 10a ; 10b ; 10c ; 10d) sont couplés à une antenne d'émission.

7. Étape de transmission (100) selon la revendication 1, dans lequel les sous-ensembles de ressources radio (202a ; 202b 202e ; 302a ; 302b ; 302c) comprennent une ou plusieurs ressources radio communes, dans laquelle au moins deux des émetteurs de composants (10; 10a; 10b; 10c; 10d) sont couplés à des antennes d'émission différentes, et dans laquelle l'étape de transmission (100) comprend des moyens pour coordonner une transmission des au moins deux émetteurs de composants (10 ; 10a ; 10b ; 10c ; 10d) couplés aux antennes d'émission différentes sur la ou les ressources radio communes (202a ; 202b ; 202c; 302a ; 302b ; 302c) de sorte qu'une combinaison spatiale coordonnée des signaux d'émission soit obtenue.

8. Étape de transmission (100) selon la revendication 1, pouvant fonctionner dans un système de communication et comprenant un émetteur de composants (10 ; 10a ; 10b ; 10c ; 10d) en tant qu'unité d'exécution primaire, l'unité d'exécution primaire (10 ; 10a ; 10b ; 10c ; 10d) correspondant à un émetteur du système de communication avec une première bande passante, et un ou plusieurs émetteurs de composants (10 ; 10a ; 10b ; 10c ; 10d) en tant qu'une ou plusieurs unités d'exécution secondaires, la ou les unités d'exécution secondaires (10 ; 10a ; 10b ; 10c ; 10d) correspondant à un émetteur du système de communication avec une deuxième bande passante différente de la première bande passante, la ou les unités d'exécution secondaires (10 ; 10a ; 10b ; 10c ; 10d) complétant la bande passante de l'unité d'exécution primaire avec une bande passante du système de communication, et dans laquelle l'étape de transmission (100) comprend des moyens pour activer et désactiver les unités d'exécution secondaires en fonction d'une situation de charge du système de communication.

9. Émetteur/récepteur (150) comprenant l'étape de transmission (100) selon la revendication 1.

10. Procédé pour une étape de transmission (100) pour un émetteur/récepteur de station de base d'un système de communication, l'étape de transmission (100) permettant d'utiliser une pluralité de ressources radio, le procédé comprenant les étapes suivantes
transmettre (32 ; 34) en utilisant séparément au moins deux sous-ensembles de ressources radio (202a ; 202b ; 202e ; 302a ; 302b ; 302e) parmi la pluralité de ressources radio, dans lequel les au moins deux sous-ensembles de ressources radio (202a ; 202b ; 202c; 302a ; 302b ; 302c) parmi la pluralité de ressources radio sont différents, et dans lequel les sous-ensembles différents de ressources radio complètent la pluralité de ressources radio, dans lequel la transmission (32 ; 34) comprend la transmission en utilisant au moins un des émetteurs de composants (10 ; 10a ; 10b ; 10c ; 10d) pour fournir des informations de commande et de système pour rendre le système accessible aux utilisateurs ; et
activer ou désactiver en outre au moins un autre des émetteurs de composants (10 ; 10a ; 10b ; 10c ; 10d) pour la transmission de données.

11. Programme informatique possédant un code de programme pour exécuter le procédé selon la revendication 10, lorsque le programme informatique est exécuté sur un ordinateur ou un processeur.
